**Europäisches Patentamt**

**European Patent Office**

**Office européen des brevets**

(11) Numéro de publication: **0 116 990**
**B1**

(12) **FASCICULE DE BREVET EUROPEEN**

(45) Date de publication du fascicule du brevet:
07.01.87

(51) Int. Cl.⁴: **H 04 B 7/015**

(21) Numéro de dépôt: **84200144.8**

(22) Date de dépôt: **03.02.84**

(54) Dispositif d'égalisation d'amplitude autoadaptatif pour faisceaux hertziens numériques.

(30) Priorité: **07.02.83 FR 8301867**

(43) Date de publication de la demande:
**29.08.84 Bulletin 84/35**

(45) Mention de la délivrance du brevet:
**07.01.87 Bulletin 87/2**

(84) Etats contractants désignés:
**DE FR GB IT SE**

(56) Documents cités:
**EP - A - 0 048 475**
**US - A - 3 378 847**

**REVUE TECHNIQUE THOMSON-CSF, vol. 13, no. 1, mars 1981, pages 135-158, Versailles, FR. PH. GERARD:**
**"Egaliseur autoadaptatif d'amplitude pour faisceaux hertziens numriques"**

(73) Titulaire: **Laboratoires d'Electronique et de Physique Appliquée L.E.P., 3, Avenue Descartes, F-94450 Limeil-Brévannes (FR)**

(84) Etats contractants désignés: **FR**

(73) Titulaire: **N.V. Philips' Gloeilampenfabrieken, Groenewoudseweg 1, NL-5621 BA Eindhoven (NL)**

(84) Etats contractants désignés: **DE GB IT SE**

(72) Inventeur: **Sari, Hikmet, Société Civile S.P.I.D. 209 rue de l'Université, F-75007 Paris (FR)**

(74) Mandataire: **Landousy, Christian et al, Société Civile S.P.I.D. 209, Rue de l'Université, F-75007 Paris (FR)**

## Description

La présente invention concerne un dispositif d'égalisation d'amplitude autoadaptatif pour faisceaux hertziens numériques.

Dans les faisceaux hertziens numériques, très sensibles aux évanouissements sélectifs, l'égalisation d'amplitude en fréquence intermédiaire améliore considérablement les performances surtout si l'évanouissement sélectif ne se trouve pas dans la bande du signal transmis, en permettant notamment une récupération de porteuse plus robuste et un élargissement de l'ouverture de l'oeil du signal démodulé. Un égaliseur atteignant ces objectifs est décrit dans l'article «Egaliseur autoadaptatif d'amplitude pour faisceaux hertziens numériques», par P. Gérard, Revue Technique Thomson-CSF, volume 13, n° 1, mars 1981, pages 135 à 158.

Un but de l'invention est de proposer, à performances comparables, un égaliseur plus simple que celui décrit dans ce document.

L'invention concerne à cet effet, dans un premier mode de réalisation de type analogique, un dispositif d'égalisation d'amplitude autoadaptatif pour faisceaux hertziens numériques comportant en série une entrée de signal à fréquence intermédiaire, un filtre transversal pour la correction des distorsions d'amplitude du signal d'entrée, et un dispositif d'asservissement de ce filtre transversal, composé lui-même de deux détecteurs sélectifs en fréquence, placés en parallèle et respectivement centrés sur deux fréquences symétriques de la fréquence centrale du signal reçu à fréquence intermédiaire, et d'un circuit d'amplification fournissant un signal caractéristique de la différence entre les signaux de sortie des deux détecteurs sélectifs et envoyé vers le filtre transversal, caractérisé en ce que le filtre transversal, à deux étages, comprend un circuit à retard apportant par rapport à l'entrée de signal à fréquence intermédiaire un retard T égal à $(2k-1)/4F_c$, où k est un entier positif et $F_c$ la fréquence centrale du signal à fréquence intermédiaire, des premier et deuxième circuits de multiplication dont les entrées sont respectivement reliées à la sortie du circuit à retard et à l'entrée de signal à fréquence intermédiaire et un additionneur des sorties des premier et deuxième circuits de multiplication, et en ce que le premier circuit de multiplication est un premier amplificateur, dont une commande automatique du gain est effectuée par le signal de sortie du circuit d'amplification du dispositif d'asserviment.

Dans un deuxième mode de réalisation, le premier circuit de multiplication consiste en un circuit série comprenant un deuxième amplificateur et un premier atténuateur à commande numérique, les $N_1$ entrées de cet atténuateur étant reliées aux $N_1$ sorties d'un premier compteur-décompteur lui-même commandé par un comparateur à zéro de la sortie du circuit d'amplification.

Les particularités et avantages de l'invention apparaîtront maintenant de façon plus précise dans la description qui suit et dans les dessins annexés, donnés à titre d'exemples non limitatifs et dans lesquels:

les figures 1 et 2 montrent deux modes de réalisation du dispositif d'égalisation selon l'invention;

les figures 3 et 4 montrent respectivement la courbe du temps de propagation de groupe et la courbe du spectre pour le dispositif d'égalisation selon l'invention;

la figure 5 montre un dispositif d'asserviment complémentaire pouvant être incorporé dans le dispositif d'égalisation selon l'invention.

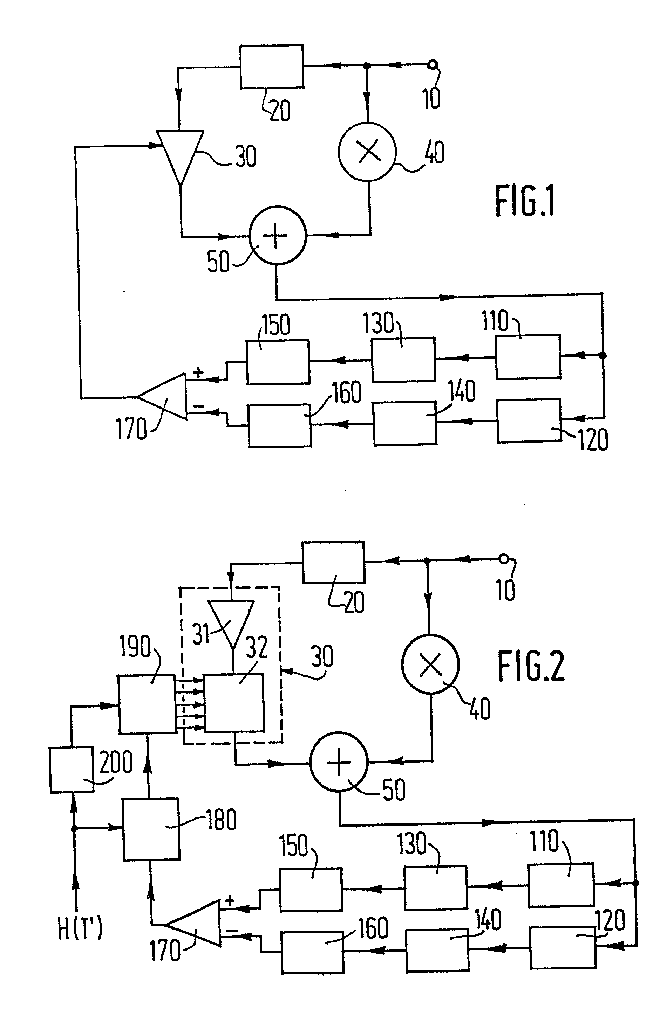

Le dispositif d'égalisation d'amplitude représenté sur la figure 1 dans son premier mode de réalisation est du type filtre transversal à deux étages et comprend une entrée 10 de signal à fréquence intermédiaire, le filtre transversal pour la correction des distorsions d'amplitude du signal d'entrée, et un dispositif d'asserVissement de ce filtre transversal; ce filtre est composé d'un circuit à retard 20, apportant un retard T égal à $(2k-1)/4F_c$, où k est un entier positif et $F_c$ la fréquence centrale du signal à fréquence intermédiaire, et de deux circuits de multiplications 30 et 40 dont les entrées sont respectivement reliées à la sortie du circuit à retard 20 et à l'entrée de signal 10 et les sorties aux deux entrées d'un additionneur 50. L'asservissement du filtre transversal est réalisé à l'aide de deux détecteurs sélectifs en fréquence, placés en parallèle et respectivement centrés sur deux fréquences symétriques de la fréquence centrale du signal reçu, et comprend, plus précisément, tout d'abord deux filtres passe-bande 110 et 120, à bande étroite, centrés respectivement sur deux fréquences $F_1$ et $F_2$ symétriques par rapport à la fréquence centrale $F_C$ du signal à fréquence intermédiaire. Les filtres 110 et 120, prévus en sortie de l'additionneur 59 et dans deux voies distinctes en parallèle, sont suivi, en série er respectivement, de deux redresseurs 130 et 140 et de deux intégrateurs 150 et 160 en sortie desquels on dispose de l'énergie du signal dans chacune des deux bandes centrées sur $F_1$ et $F_2$. Les sorties des intégrateurs sont envoyées sur les deux entrées d'un circuit d'amplification 170, détectant la différence d'énergie entre lesdites deux bandes de fréquence, et dont la sortie est fournie au premier circuit de multiplication 30, qui est ici un amplificateur, pour constituer le signal de commande automatique de gain.

Dans un deuxième mode de réalisation du dispositif selon l'invention, représenté sur la figure 2, le premier circuit de multiplication n'est plus un simple amplificateur, mais consiste cette fois en un circuit série comprenant un amplificateur 31 et un atténuateur à commande numérique 32, dont les $N_1$ entrées sont reliées aux $N_1$ sorties d'un compteur-décompteur 190 lui-même commandé par un comparateur à zéro 180 de la sortie du circuit d'amplification 170. Le comparateur 180 reçoit un signal d'horloge H (T') à la cadence définie par la période T' (cette cadence peut être modifiée si nécessaire selon la plus ou moins grande rapidité des variations du canal, afin de mieux suivre celles-ci), et le compteur-décompteur 190 reçoit ce même signal d'horloge mais retardé dans un circuit à retard 200 pour tenir compte essentiellement du temps d'établissement du comparateur.

Contrairement à l'égaliseur décrit dans le document cité plus haut, qui comprend un flitre transversal à phase linéaire sur toutes les fréquences, le dispositif d'égalisation conforme à la structure proposée ci-dessus dans deux modes de réalisation de type analogique et numérique respectivement n'a pas un temps de propagation de groupe constant. L'expression de ce temps de propagation de groupe est en effet donnée par une égalité de la forme:

$$D(\omega) = \frac{b\,T\,(b\,+\,a\cos\omega T)}{a^2\,+\,b^2\,+\,2ab\,\cos\omega T}$$

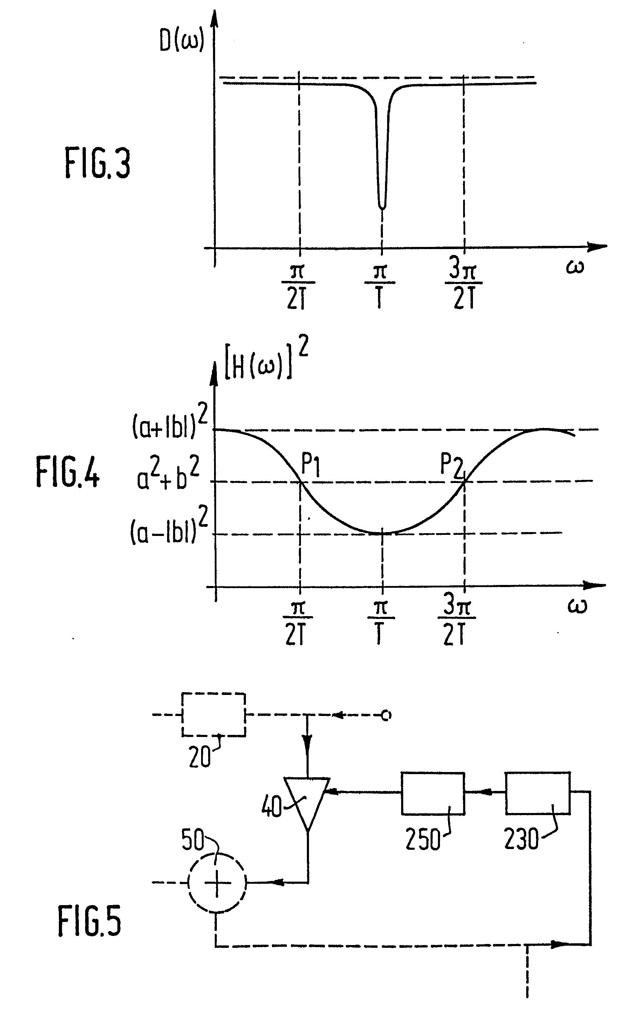

où a et b sont les coefficients de multiplication du filtre transversal et T le retard apporté au signal d'entrée de ce filtre, et une brusque variation de $D(\omega)$ est observée au voisinage des fréquences telles que $\beta = \pi\,(2k-1)/T$, k étant un entier positif (voir la figure 3, où apparaît en trait continu la courbe de variation de $D(\omega)$ et en trait interrompu la même courbe, rectiligne, dans le cas du filtre transversal de l'égaliseur décrit dans le document précédemment cité). Mais, à l'exception des bandes étroites centrées sur de telles fréquences correspondant à $\omega = \pi/T$, $\omega = 3\pi/T$, etc...., le temps de propagation de groupe est pratiquement constant. Compte tenue de cette observation, ainsi que du fait que l'allure de la courbe (voir la figure 4) représentant le spectre du dispositif selon l'invention (spectre donné par une expression de la forme $|H(\omega)^2| = a^2 + b^2 + 2\,ab\,\cos\omega T$), est très voisine de celle représentant le spectre associé à l'égaliseur dérit dans le document cité, si la fréquence de la porteuse coïncide avec l'un des points de pivotement $P_1$, $P_2$, etc.... de $|H(\omega)|^2$ correspondant aux fréquences telles que $\omega = \pi(2k-1)/2T$ (k entier positif), alors le dispositif d'égalisation adaptative de la figure 1 ou de la figure 2 ne change pas la réponse en phase du canal (les brusques variations de temps de propagation de groupe sont maintenues en dehors de la bande d'utilisation, et cela d'autant mieux qu'on se place à de tels points de pivotement, c'est-à-dire sensiblement à égale distance des bandes étroites où se produisent ces variations), et peut remplacer l'égaliseur décrit dans le document cité, de façon avantageuse puisque sa structure est plus simple.

Bien entendu, la présente invention n'est pas limitée aux modes de réalisation de l'invention qui viennent d'être décrits, à partir desquels d'autres variantes peuvent être proposées sans pour cela sortir du cadre de l'invention. En particulier, le dispositif selon l'invention peut comprendre un deuxième dispositif d'asservissement du filtre transversal, à des fins de contrôle automatique de gain. Ce dispositif d'asservissement, représenté sur la figure 5, est placé également en sortie de l'additionneur 50 du filtre transversal, et comprend en série un redresseur 230 et un intégrateur 250 dont le signal de sortie est envoyé vers le deuxième circuit de multiplication 40. Le circuit 40 peut être un amplificateur dont le signal de commande automatique de gain est alors constitué par le signal de sortie de l'intégrateur 250; le circuit 40 peut aussi, comme précédemment, consister en un circuit série comprenant un amplificateur et un atténuateur à commande numérique, commandé par la sortie de l'intégrateur 250 par l'intermédiaire d'un comparateur à zéro et d'un compteur-décompteur (recevant des signaux d'horloge de même nature que ci-dessus).

## Revendications

1. Dispositif d'égalisation d'amplitude autoadaptatif pour faisceaux hertziens numériques comportant en série une entrée (10) de signal à fréquence intermédiaire, un filtre transversal pour la correction des distorsions d'amplitude du signal d'entrée, et un dispositif d'asservissement de ce filtre transversal, composé lui-même de deux détecteurs sélectifs en fréquence (110, 130, 150 et 120, 140, 160), placés en parallèle et respectivement centrés sur deux fréquences symétriques de la fréquence centrale du signal reçu à fréquence intermédiaire, et d'un circuit d'amplification (170) fournissant un signal caractéristique de la différence entre les signaux de sortie des deux détecteurs sélectifs et envoyé vers le filtre transversal, caractérisé en ce que le filtre transversal, à deux étages, comprend un circuit à retard (20) apportant par rapport à l'entrée (10) de signal à fréquence intermédiaire un retard T égal à $(2k-1)/4F_c$, ou k est un entier positif et $F_c$ la fréquence centrale du signal à fréquence intermédiaire, des premier et deuxième circuits de multiplication (30 et 40) dont les entrées sont respectivement reliées à la sortie du circuit à retard (20) et à l'entrée (10) de signal à fréquence intermédiaire et un additionneur (50) des sorties des premier et deuxième circuits de multiplication (30 et 40), et en ce que le premier circuit de multiplication (30) est un premier amplificateur, dont une commande automatique du gain est effectuée par le signal de sortie du circuit d'amplification (170) du dispositif d'asservissement.

2. Dispositif d'égalisation d'amplitude autoadaptatif pour faisceaux hertziens numériques comportant en série une entrée (10) de signal à fréquence intermédiaire, un filtre transversal pour la correction des distorsions d'amplitude du signal d'entrée, et un dispositif d'asservissement de ce filtre transversal, composé lui-même de deux détecteurs sélectifs en fréquence (110, 130, 150 et 120, 140, 160), placés en parallèle et respectivement centrés sur deux fréquences symétriques de la fréquence centrale du signal reçu à fréquence intermédiaire, et d'un circuit d'amplification (170) fournissant un signal caractéristique de la différence entre les signaux de sortie des deux détecteurs sélectifs et envoyé vers le filtre transversal, caractérisé en ce que le filtre transversal, à deux étages, comprend un premier circuit à retard (20) apportant par rapport à l'entrée (10) de signal à fréquence intermédiaire un retard T égal à $(2k-1)/4F_c$, où k est un entier positif et $F_c$ la fréquence centrale du signal à fréquence intermédiaire, des premier et deuxième circuits de multiplication (30 et 40) dont les entrées sont respectivement reliées à la sortie du circuit à retard (20) et à l'entrée (10) de signal à fréquence intermédiaire et un additionneur (50) des sorties des premier et deuxième circuits de multiplication (30 et 40), et en ce que le premier circuit de multiplication (30) est un circuit série comprenant un premier amplificateur (31) et un premier atténuateur à commande numérique (32), les $N_1$ entrées de cet atténuateur étant reliées aux $N_1$ sorties d'un premier compteur-décompteur (190) lui-même commandé par un comparateur à zéro (180) de la sortie du circuit d'amplification (170).

3. Dispositif selon l'une des revendications 1 et 2, caractérisé en ce qu'il comprend, en sortie de l'additionneur (50) du filtre transversal, un deuxième dispositif d'asservissement de ce filtre, composé en série d'un redresseur (230) et d'un intégrateur (250), le signal de sortie de cet intégrateur étant envoyé vers le deuxième circuit de multiplication (40), qui est un amplificateur, pour en constituer le signal de commande automatique de gain.

4. Dispositif selon l'une des revendications 1 et 2, caractérisé en ce que le deuxième circuit de multiplication (40) est un circuit série comprenant un deuxième amplificateur et un deuxième atténuateur à commande numérique et en ce que le dispositif d'égalisation comprend, en sortie de l'additionneur (50) du filtre transversal, un deuxième dispositif d'asservissement de ce filtre, composé en série d'un redresseur (230), d'un intégrateur (250), d'un deuxième comparateur à zéro et d'un deuxième compteur-décompteur dont les $N_2$ sorties sont reliées aux $N_2$ entrées du deuxième atténuateur à commande numérique.

**Claims**

1. An auto-adaptive amplitude-equalizing arrangement for digital microwave radio links comprising, arranged in series, an intermediate-frequency signal input (10), a transversal filter for correcting of amplitude distorsions of the input signal, and a control device for this transversal filter, which control device consists of two frequency-selective detectors (110, 130, 150 and 120, 140, 160) arranged in parallel and respectively centred on two frequencies which are symmetrical with respect to the centre frequency of the received intermediate-frequency signal, and of an amplifying circuit (170) supplying a signal which is characteristic of the difference between the output signals of the two frequency-selective detectors and is applied to the transversal filter, characterised in that the two-stage transversal filter comprises a delay circuit (20) providing, with respect to the intermediate-frequency signal input (10), a delay T equal to $(2k-1)/4F_c$, where k is a positive integer and $f_c$ is the centre frequency of the intermediate-frequency signal, a first (30) and a second (40) multiplication circuit whose inputs are respectively connected to the output of the delay circuit (20) and to the intermediate-frequency signal input (10), and an adder (50) connected to the outputs of the first (30) and second (40) multiplication circuits, the first multiplication circuit being an amplifier, an automatic control of whose gain is effected by the output signal of the amplifying circuit (170) of the control device.

2. An auto-adaptive amplitude-equalizing arrangement for digital microwave radio links comprising, arranged in series, an intermediate-frequency signal input (10), a transversal filter for correcting amplitude distorsions of the input signal, and a control device for this transversal filter, which control device consists of two frequency-selective detectors (110, 130, 150 and 120, 140, 160) arranged in parallel and respectively centred on two frequencies which are symmetrical with respect to the centre frequency of the received intermediate-frequency signal, and of an amplifying circuit (170) supplying a signal, which is characteristic of the difference between the output signals of the two frequency-selective detectors and is applied to the transversal filter, characterised in that the two-stage transversal filter comprises a first delay circuit (20) providing, with respect to the intermediate frequency signal input (10), a delay T equal to $(2k-1)/4F_c$, where k is a positive integer and $F_c$ is the centre frequency of the intermediate-frequency signal a first (30) and a second (40) multiplication circuit whose inputs are respectively connected to the output of the delay circuit (20) and to the intermediate-frequency signal input (10), and an adder (50) connected to the outputs of the first (30) and second (40) multiplication circuits, and in that the first multiplication circuit (30) is a series arrangement comprising a first amplifier (31) and a first digitally controlled attenuater (32), whose $N_1$ inputs are connected to the $N_1$ outputs of a first up/down counter (190) which is controlled by a zero comparator (180) for the output of the amplifying circuit (170).

3. An arrangement as claimed in one of the Claims 1 and 2, characterized in that it comprises, provided at the output of the adder (50) of the transversal filter, a second control device for this filter which consists of a rectifier (230) and an integrator (250) in series, the output signal of this integrator being applied to the second multiplication circuit (40), which is an amplifier, so as to provide the automatic gain-control signal therefor.

4. An arrangement as claimed in one of the Claims 1 and 2, characterized in that the second multiplication circuit (40) is a series arrangement comprising a second amplifier and a second digitally controlled attenuator, and in that the equalizing arrangement comprises, provided at the output of the adder (50) of the transversal filter, a second control device for this filter which consists of a rectifier (230), an integrator (250), a second zero comparator and a second up/down-counter, whose $N_2$ outputs are connected to the $N_2$ inputs of the second digitally controlled attenuator.

**Patentansprüche**

1. Einrichtung zur selbstanpassenden Amplitudenentzerrung für digitale Richtfunkstrecken, die in Reihe einen ZF-Signaleingang (10), ein Transversalfilter zum Korrigieren von Amplitudenverzerrungen des Eingangssignals und eine Regelschaltung für das Transversalfilter aufweist, die an sich aus zwei frequenzselektiven parallelgeschalteten Detektoren (110, 130, 150 und 120, 140, 160) besteht, die auf zwei Frequenzen zentriert sind, die in bezug auf die zentrale Frequenz des empfangenen ZF-Signals symmetrisch sind, sowie aus einer Verstärkerschaltung (170), die dem Transversalfilter ein Signal liefert, das für die Differenz zwischen den Ausgangssignalen der zwei frequenzselektiven Detektoren charakteristisch ist, dadurch gekennzeichnet, dass das zweistufige Transversalfilter eine Verzögerungsschaltung (20) aufweist, die in bezug auf den ZF-Signaleingang (10) eine Verzögerung T gleich (2k-1)/4$F_c$ verursacht, wobri k eine positive ganze Zahl und $F_c$ die zentrale Frequenz des ZF-Signals ist, eine erste und zweite Multiplizierschaltung (30 und 40), deren Eingang mit dem Ausgang der Verzögerungsschaltung (20) bzw. dem ZF-Signaleingang (10) verbunden ist, sowie einen Addierer (50) für die Ausgangssignale der ersten und zweiten Multiplizierschaltung (30 und 40), und dass die erste Multiplizierschaltung (30) ein erster Verstärker ist, dessen automatische Verstärkungsregelung durch das Ausgangssignal der Verstärkerschaltung (170) der Regelschaltung herbeigeführt wird.

2. Einrichtung zur selbstanpassenden Amplitudenentzerrung für digitale Richtfunkstrecken, die in Reihe einen ZF-Signaleingang (10), ein Transversalfilter zum Korrigieren von Amplitudenverzerrungen des Eingangssignals und eine Regelschaltung für das Transversalfilter aufweist, die an sich aus zwei frequenzselektiven parallelgeschalteten Detektoren (110, 130, 150 und 120, 140, 160) besteht, die auf zwei Frequenzen zentriert sind, die in bezug auf die zentrale Frequenz des empfangenen ZF-Signals symmetrisch sind, sowie aus einer Verstärkerschaltung (170), die dem Transversalfilter ein Signal liefert, das für die Differenz zwischen den Ausgangssignalen der zwei frequenzselektiven Detektoren charakteristisch ist, dadurch gekennzeichnet, dass das zweistufige Transversalfilter eine Verzögerungsschaltung (20) aufweist, die in bezug auf den ZF-Signaleingang (10) eine Verzögerung T gleich (2k-1)/4$F_c$ verursacht, wobei k eine positive ganze Zahl und $F_c$ die zentrale Frequenz des ZF-Signals ist, eine erste und zweite Multiplizierschaltung (30 und 40), deren Eingang mit dem Ausgang der Verzögerungsschaltung (20) bzw. dem ZF-Signaleingang (10) verbunden ist, sowie einen Addierer (50) für die Ausgangssignale der ersten und zweiten Multiplizierschaltung (30 und 40), und dass die erste Multiplizierschaltung (30) eine Reihenschaltung aus einem ersten Verstärker (31) und einem ersten digital gesteuerten Dämpfungsglied (32) ist, wobei die $N_1$ Eingänge dieses Dämpfungsgliedes mit den $N_1$ Ausgängen eines ersten Vorwärts-Rückwärts-Zählers (190) verbunden sind, der an sich über eine Null-Vergleichsanordnung (180) von dem Ausgang der Verstärkerschaltung (170) gesteuert wird.

3. Einrichtung nach einem der Ansprüche 1 und 2, dadurch gekennzeichnet, dass diese verbunden mit dem Ausgang des Addierers (50) des Transversalfilters eine zweite Regelschaltung für dieses Filter aufweist, die aus einer Reihenschaltung aus einem Gleichrichter (230) und einem Integrator (250) besteht, wobei das Ausgangssignal dieses Integrators der zweiten Multiplizierschaltung (40), die ein Verstärker ist, zugeführt wird, zum Bilden des automatischen Verstärkungsregelsignals für diesen Verstärker.

4. Einrichtung nach einem der Ansprüche 1 und 2, dadurch gekennzeichnet, dass die zweite Multiplizierschaltung (40) eine Reihenschaltung aus einem zweiten Verstärker und einem zweiten digital gesteuerten Dämpfungsglied ist, und dass die Entzerrungsanordnung verbunden mit dem Ausgang des Addierers (50) des Transversalfilters eine zweite Regelschaltung für das Filter aufweist, die aus einer Reihenschaltung aus einem Gleichrichter (230), einem Integrator (250), einer zweiten Null-Vergleichsschaltung und einem zweiten Vorwärts-Rückwärts-Zähler besteht, dessen $N_2$ Ausgänge mit den $N_2$ Eingängen des zweiten digital gesteuerten Dämpfungsgliedes verbunden sind.

FIG.1

FIG.2

H(T')

FIG.3

$D(\omega)$

$\dfrac{\pi}{2T}$    $\dfrac{\pi}{T}$    $\dfrac{3\pi}{2T}$    $\omega$

FIG.4

$[H(\omega)]^2$

$(a+|b|)^2$

$a^2+b^2$

$(a-|b|)^2$

$P_1$    $P_2$

$\dfrac{\pi}{2T}$    $\dfrac{\pi}{T}$    $\dfrac{3\pi}{2T}$    $\omega$

FIG.5

20

40

50

250    230